# EUROPÄISCHE PATENTANMELDUNG

(11) **EP 1 167 052 A2**
(43) Veröffentlichungstag der Anmeldung: **02.01.2002**
(21) Anmeldenummer: 01115056.2
(22) Anmeldetag: 21.06.2001
(51) Int. Cl.: B41M 5/00, C09D 11/00, D06P 5/00

(54) **Bedruckte Medienbeschichtung und Tinte**

(30) Priorität: 22.06.2000 US 213243 P; 23.06.2000 DE 10030704
(71) Anmelder: Degussa AG, 40474 Düsseldorf (DE)
(72) Erfinder: Stübbe, Andreas, 63739 Aschaffenburg (DE); Glaum, Holger, Dr., 08540 Prnceton, N.J. (US); Lortz, Wolfgang, Dr., 63607 Wächtersbach (DE); Bergemann, Klaus, Dr., 50170 Kerpen-Sindorf (DE); Karl, Alfons, Dr., 63584 Gründau (DE); Kaufmann, Marita, Dr., 64347 Griesheim (DE)

(57) **Zusammenfassung**

Die Erfindung betrifft eine bedruckte Medienbeschichtung, wobei mindestens ein Bestandteil der Tinte über eine chemische Bindung mit mindestens einem Bestandteil der Medienbeschichtung verbunden ist. Ferner ist ein Verfahren zur Herstellung der bedruckten Medienbeschichtung, sowie deren Verwendung beschrieben.

## Beschreibung

Die Erfindung betrifft eine bedruckte Medienbeschichtung, ein Verfahren zu deren Herstellung und deren Verwendung.

Eine Medienbeschichtung besteht in der Regel aus einer Beschichtung, die auf einem Medium angeordnet ist. Die Beschichtung dient als Tintenaufnahmeschicht.

Aus EP 0514633 ist bekannt, daß die Tintenaufnahmeschicht, die auf einem Träger angeordnete ist, einen Polyvinylalkohol, ein keine vernetztenden Gruppen enthaltendes kationisches Polymer, eine amorphe Kieselsäure mit einer spezifischen Oberfläche von 200 bis 400m²/g und einer Teilchengröße von 2 bis 12 µm sowie Poly(methylvinylether)maleinsäureanhydrid und/oder ein Benzotriazolderivat enthält.

Aus EP 0759365 ist ein Ink Jet Aufzeichnungsmaterial bekannt, daß einen Träger und mindestens eine Aufzeichnungsschicht auf dem Träger besitzt, wobei mindestens eine der Aufzeichnungsschichten kolloidale Teilchen und ein wasserlösliches Harz enthält.

Die bekannten Tinten und Beschichtungsmaterialien haben den Nachteil, daß sie eine niedrige Wasserbeständigkeit besitzen.

Aufgabe der vorliegenden Erfindung ist es eine bedruckte Medienbeschichtung mit verbesserter Druckqualität, Wasserbeständigkeit und hoher Druckgeschwindigkeit zur Verfügung zu stellen.

Gegenstand der Erfindung ist eine bedruckte Medienbeschichtung, welche dadurch gekennzeichnet ist, daß mindestens ein Bestandteil der Tinte über eine chemische Bindung mit mindestens einem Bestandteil der Medienbeschichtung verbunden ist.

Die Medien können als Träger für die Medienbeschichtung verwendet werden. Die Medien für die Medienbeschichtung können Glas, Keramik, Kunststoff, Textilien, Leder oder Papier sein. Die bedruckte Medienbeschichtung kann über ein oder mehrere Zwichenschichten mit den Medien verbunden sein.

Ein weiterer Gegenstand der Erfindung ist eine Tinte, welche dadurch gekennzeichnet ist, daß mindestens ein Bestandteil der Tinte eine chemische Bindung mit mindestens einem Bestandteil der Medienbeschichtung ausbildet.

Ein weiterer Gegenstand der Erfindung ist eine Medienbeschichtung, welche dadurch gekennzeichnet ist, daß mindestens ein Bestandteil der Medienbeschichtung eine chemische Bindung mit mindestens einem Bestandteil der Tinte ausbildet.

Ein weiterer Gegenstand der Erfindung ist ein Verfahren zur Herstellung der bedruckten Medienbeschichtung, welches dadurch gekennzeichnet ist, daß man die Tinte auf die Medienbeschichtung aufsprüht, aufdruckt oder aufdüst und mindestens ein Bestandteil der Tinte mit mindestens einem Bestandteil der Medienbeschichtung unter Ausbildung einer chemischen Bindung reagiert.

Die chemische Anbindung der Tinte an die Medienbeschichtung kann nach den folgenden Reaktionen erfolgen:

(a) Die Tinte kann Nitrit, vorzugsweise Zink-, Natrium-, Kalium- oder Lithiumnitrit, und Ruß und/oder Farbstoff und die Medienbeschichtung eine Aminogruppen-haltige Verbindung enthalten.
Als Ruß können Furnace-, Gas-, Flamm-, Acetylenruße oder Inversionsruße, bekannt aus DE 195 21 565, verwendet werden. Die Farbstoffe können Verbindungen mit aromatischen Systemen sein.
Als Aminogruppen-haltige Verbindungen können gefällte oder pyrogene Kieselsäuren, pyrogene Oxide, Kreide, Kaoline, Glimmer, Zinkoxid verwendet werden, die durch eine chemische Umsetzung, zum Beispiel mit Silanen, so modifiziert werden, daß diese primäre Aminogruppen, vorzugsweise Arylgebundene primäre Aminogruppen, auf der Oberfläche enthalten.
Die Reaktion kann im sauren pH-Bereich stattfinden. Hierzu wird die Medienbeschichtung so eingestellt, daß nach dem Bedrucken der Medienbeschichtung ein pH-Wert < 6,0, vorzugsweise < 3,0, vorliegt.
Nach dem Bedrucken reagiert das Nitrit der Tinte mit dem primären Amin der Medienbeschichtung unter Bildung eines Diazoniumsalzes, das anschließend mit der Rußoberfläche oder dem Farbstoff reagiert.

Die Reaktion kann nach folgender Gleichung ablaufen

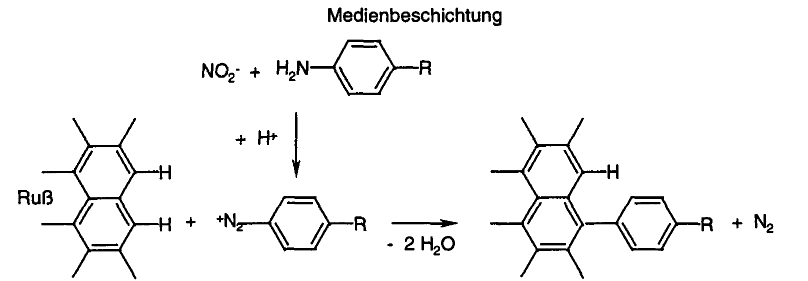

(b)Die Tinte kann einen dotierten Ruß oder Farbstoff und die Medienbeschichtung eine Hydroxygruppen-haltige Verbindung enthalten, wobei der dotierte Ruß oder Farbstoff und/oder die Hydroxygruppen-haltige Verbindung mit einem Silan modifiziert sind. Die funktionellen Gruppen des dotierten Rußes oder Farbstoffes oder silanmodifizierten Rußes oder Farbstoffes können mit der Hydroxygruppen-haltigen Verbindung oder silanmodifizierten Hydroxygruppen-haltigen Verbindung reagieren.
Als dotierten Ruß können Si-haltige Ruße, bekannt aus WO 98/45361 oder DE 19613796, oder metallhaltige Ruße, bekannt aus WO 98/42778, verwendet werden. Als Farbstoff können anorganische oder organische Farbstoffe eingesetzt werden. Anorganische Farbstoffe können sein Metalloxide, wie beispielsweise (Zn,Co). Al₂O₃, ZnO.(Al, Cr)₂O₃, (Zn,Co)O.(Al,Cr)₂O₃, ZnO.(Al,Cr,Fe)₂O₃, MnO.Cr₂O₃, (Mn,Co)O.(Cr,Fe)₂O₃, CuO.Cr₂O₃, Spinelle oder dotierte Oxide, oder Silikate, wie beispielsweise Olivine, 2Co.SiO₂, 2(Ni,Zn).SiO₂, Vanadiumblau oder Türkisch Blau.
Als Hydroxygruppen-haltige Verbindungen können gefällte Kieselsäuren, pyrogene Kieselsäuren, pyrogene Oxide, Kieselsole, Kieselgele oder natürliche Pigmente verwendet werden.
Wird nur der dotierte Ruß oder Farbstoff oder die Hydroxygruppenhaltige-Verbindung mit Silan modifiziert, so können bifunktionelle Silane, wie beispielsweise 3-Chloropropyltrialkoxysilan, Isocyanatsilan, Tetraethylorthosilikat (beispielsweise Dynasil® A), Tetramethylorthosilikat (beispielsweise Dynasil® M), Tetra-n-propylsilikat (beispielsweise Dynasil® P), Tetrabutylglykolsilikat (beispielsweise Dynasil® BG), Ethylpolysilikat (beispielsweise Dynasil® 40), 3-Aminopropyltrimethoxysilan (beispielsweise Dynasylan® AMMO), 3-Aminopropyltriethoxysilan (beispielsweise Dynasylan® AMEO), N-Aminoethyl-3-aminopropyltrimethoxysilan (beispielsweise Dynasylan® DAMO), triamino-funktionelles Propyltrimethoxysilan (beispielsweise Dynasylan® TRIAMO), 3-Mercaptopropyltrimethoxysilan (beispielsweise Dynasylan® MTMO); 3-Glycidyloxypropyltrimethoxysilan (beispielsweise Dynasylan® GLYMO), 3-Glycidyloxypropyltriethoxysilan (beispielsweise Dynasylan® GLYEO), 3-Methacryloxypropyltrimethoxysilan (beispielsweise Dynasylan® MEMO), 3-Acryloxypropyltrimethoxysilan, Vinyltrichlorsilan (beispielsweise Dynasylan® VTC), Vinyltrimethoxysilan (beispielsweise Dynasylan® (VTMO), Vinyltriethoxysilan (beispielsweise Dynasylan® VTEO), Allyltrichlorsilan, Allyltrimethoxysilan, Allyltriethoxysilan, N-(n-Butyl)-3-aminopropyltrimethoxysilan (beispielsweise Dynasylan® 1189), oder 3-Ureidopropyltriethoxysilan (beispielsweise Dynasylan® 2201/2220) verwendet werden. Hierzu wird der dotierte Ruß oder Farbstoff oder die Hydroxygruppen-haltige Verbindung mit dem Silan umgesetzt.
Die Reaktion kann nach folgender Gleichung ablaufen

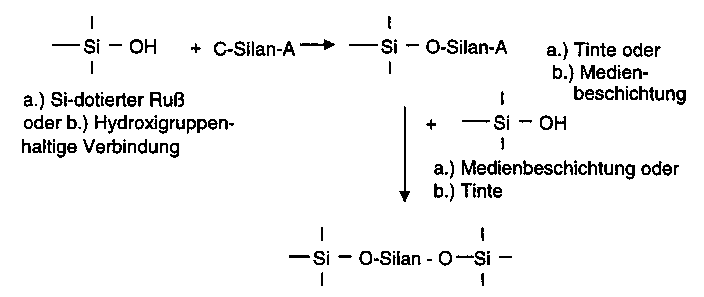

Die funktionelle Gruppe A kann eine Halogen-, Alkoxy-, Epoxy-oder Isocyanat-Gruppe sein.
Wird der dotierte Ruß oder Farbstoff und die Hydroxygruppen-haltige Verbindung mit Silan modifiziert, enthalten sowohl der dotierte Ruß oder Farbstoff als auch die Hydroxygruppen-haltige Verbindung nach der Modifizierung funktionelle Gruppen, die miteinander reagieren können. Beispielsweise können der dotierte Ruß oder Farbstoff und die Hydroxygruppen-haltige Verbindung mit den folgenden Kombinationen an Silanen modifiziert werden:
- Alkoxyaminosilan, beispielsweise 3-Aminopropyltrimethoxysilan (beispielsweise Dynasylan® AMMO), 3-Aminopropyltriethoxysilan (beispielsweise Dynasylan® AMEO), oder N-Aminoethyl-3-aminopropyltrimethoxysilan (beispielsweise Dynasylan® DAMO),
   und Alkoxyepoxysilan, beispielsweise 3-Glycidyloxypropyltrimethoxysilan (beispielsweise Dynasylan® GLYMO) oder 3-Glycidyloxypropyltriethoxysilan (beispielsweise Dynasylan® GLYEO),
- Alkoxyammoniumchloridsilan, beispielsweise (3-Triethoxysilylpropyl)dimethyloctadecylammonium-chlorid oder (3-Triethoxysilylpropyl)trimethylammoniumchlorid, und Sulfonatohydroxysilan, beispielsweise 3-Sulfonatopropyltrihydroxysilan,
- Alkoxyaminosilan, beispielsweise 3-Aminopropyltrimethoxysilan (beispielsweise Dynasylan® AMMO), 3-Aminopropyltriethoxysilan (beispielsweise Dynasylan® AMEO), oder N-Aminoethyl-3-aminopropyltrimethoxysilan (beispielsweise Dynasylan® DAMO)
   und Isocyanatsilan.
   Die Reaktion kann nach folgender Gleichung ablaufen

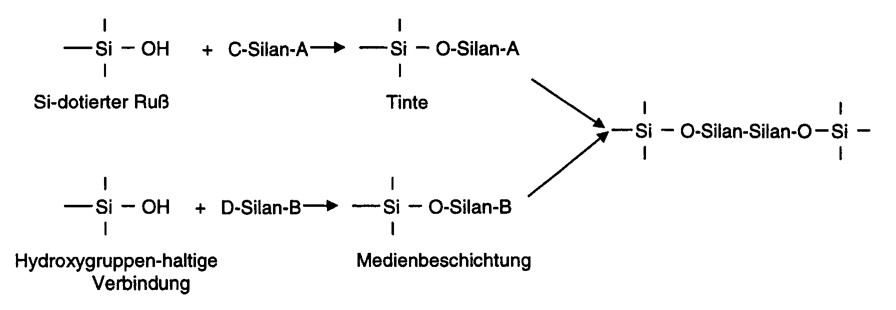

Die funktionellen Gruppen A und B können anionische- und kationische Gruppen, Amino- und Epoxy-Gruppen oder Amino- und Isocyanat-Gruppen sein.

(c)Die Tinte kann einen, gegebenenfalls mit einem Silan modifizierten, dotierten Ruß oder Farbstoff und die Medienbeschichtung ein Polymer mit funktionellen Gruppen enthalten. Die funktionellen Gruppen des dotierten Rußes oder Farbstoffes oder silanmodifizierten Rußes oder Farbstoffes können mit den funktionellen Gruppen des Polymers reagieren.
Wird der dotierte Ruß oder Farbstoff nicht mit Silan modifiziert, so kann das Polymer funktionelle Gruppen enthalten, die mit dem dotierten Ruß oder Farbstoff reagieren können. Als dotierten Ruß beziehungsweise Farbstoff können die vorgenannten Verbindungen eingesetzt werden. Das Polymer kann funktionelle Gruppen, wie beispielsweise Epoxy-, Isocyanat-, Alkoxy-oder Hydroxy-Gruppen enthalten.
Die Reaktion kann nach folgender Gleichung ablaufen

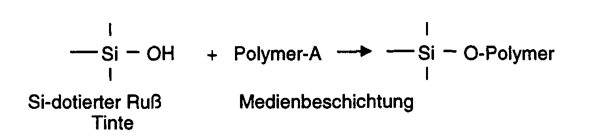

Wird der dotierte Ruß oder Farbstoff mit Silan modifiziert, enthalten sowohl der modifizierte dotierte Ruß oder Farbstoff als auch das Polymer funktionelle Gruppen, die miteinander reagieren können.
Beispielsweise kann der dotierte Ruß oder Farbstoff mit den folgenden Silanen modifiziert werden, wobei das Polymer entsprechende funktionelle Gruppen besitzen muß:
- Alkoxyammoniumchloridsilan, beispielsweise (3-Triethoxysilylpropyl)dimethyloctadecylammonium-chlorid oder (3-Triethoxysilylpropyl)trimethylammoniumchlorid, und Polymer mit Sulfonat-Gruppen,
- Sulfonatohydroxysilan, beispielsweise 3-Sulfonatopropyltrihydroxysilan,
   und Polymer mit Ammoniumchlorid-Gruppen,
- Alkoxyaminosilan, beispielsweise 3-Aminopropyltrimethoxysilan (beispielsweise Dynasylan® AMMO), 3-Aminopropyltriethoxysilan (beispielsweise Dynasylan® AMEO), oder N-Aminoethyl-3-aminopropyltrimethoxysilan (beispielsweise Dynasylan® DAMO),
   und Polymer mit Epoxygruppen,
- Alkoxyepoxysilan, beispielsweise 3-Glycidyloxypropyltrimethoxysilan (beispielsweise Dynasylan® GLYMO), oder 3-Glycidyloxypropyltriethoxysilan (beispielsweise Dynasylan® GLYEO),
   und Polymer mit Amino-Gruppen,
- Alkoxyaminosilan, beispielsweise 3-Aminopropyltrimethoxysilan (beispielsweise Dynasylan® AMMO), 3-Aminopropyltriethoxysilan (beispielsweise Dynasylan® AMEO), oder N-Aminoethyl-3-aminopropyltrimethoxysilan (beispielsweise Dynasylan® DAMO),
   und Polymer mit Isocyanat-Gruppen oder
- Isocyanatsilan,
   und Polymer mit Amino-Gruppen.

Die Reaktion kann nach folgender Gleichung ablaufen

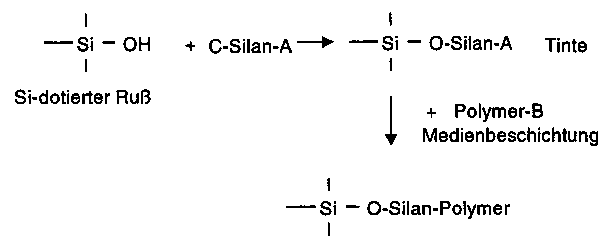

Das Polymer kann ein Copolymer, Blockcopolymer, Polyampholyt oder Kammpolymer sein. Dabei sind die Polymeren so aufgebaut, dass die vorher genannten funktionellen Gruppen vorhanden sind beziehungsweise durch polymeranaloge Umsetzung eingebaut werden können. Das Molekulargewicht Mw des Polymeren kann kleiner 100.000 g/mol, bevorzugt kleiner 10.000 g/mol, sein.

Es können Copolymere auf Basis (Meth)acrylsäure mit basischen (Meth)-acrylaten, wie Dimethylaminoethyl(meth)acrylat und Dimethylaminopropyl(meth)-acrylamid und deren quaternären Ammoniumverbindungen sowie weiteren Alkyl-oder Aryl(meth)acrylaten (zum Beispiel C₄₋₃₀-Alkyl(meth)acrylate, Cyclohexyl(meth)acrylat, Benzyl(meth)acrylat, Phenylethyl(meth)acrylat), heterocyclischen (Meth)acrylaten (zum Beispiel Morpholinoethyl(meth)acrylat, N(2-Methacryloyloxyethyl)ethylenharnstoff) oder Hydroxyestern (zum Beispiel 2-Hydroxyethyl(meth)acrylat, Hydroxypropyl(meth)acrylat) oder Alkyl-polyethylenglykol(200-2000)(meth)acrylaten (zum Beispiel Methoxypolyethylenglykol750methacrylat) verwendet werden. Als Polyampholyte können wasserlösliche Polymere auf Basis (Meth)acrylsäure, die dispergierende, beziehungsweise pigmentstabilisierende Eigenschaften besitzen und darüber hinaus durch Wechselwirkung mit dem Rußpigmenten eine Diffusion in die Papieroberfläche verhindern sollen, verwendet werden. Als Kammpolymere können Pfropfpolymere mit Emulgatoreigenschaften verwendet werden, die man erhält durch Copolymerisation von hydrophoben, endgruppenfunktionalisierten Makromonomeren mit hydrophilen Monomeren (EP 0 728 780 B1). Die Makromonomeren mit (Meth)acryloylendgruppe werden zum Beispiel aus C₈-C₃₀Alkylmethacrylaten, Cyclohexylmethacrylat oder Benzylmethacrylat hergestellt und anschließend mit hydrophilen (Meth)acrylaten (zum Beispiel (Meth)acrylsäure, (Meth)acrylamid, 2-Hydroxyethyl(meth)-acrylat, Hydroxypropyl(meth)acrylat, Dimethylaminoethyl(meth)acrylat und Dimethylaminopropyl(meth)acrylamid und deren quaternären Ammoniumverbindungen).

Gleichermaßen geeignet können Blockcopolymere mit gleicher Monomerzusammensetzung verwendet werden.

Als Polymere können Copolymere verwendet werden, die aus Acrylamid-Monomeren und mindestens einem der Monomeren, ausgewählt aus Acrylsäure, Dimethylaminopropylamin, Dimethylaminopropylacrylamid (basisch, neutral, quaterniert), Dimethylaminoethylacrylat oder Dimethylaminoethylmethacrylat hergestellt werden.

(d) Die Tinte kann ein Polymer mit funktionellen Gruppen und die Medienbeschichtung eine Hydroxygruppen-haltige, gegebenenfalls mit Silan modifizierte, Verbindung enthalten. Die funktionellen Gruppen des Polymers können mit den funktionellen Gruppen der Hydroxygruppen-haltigen Verbindung oder silanmodifizierten Hydroxygruppen-haltigen Verbindung reagieren.
Als Hydroxygruppen-haltige Verbindung können gefällte Kieselsäuren, pyrogene Kieselsäuren, pyrogene Oxide, Kieselsole, Kieselgele oder natürliche Pigmente verwendet werden.
Das Polymer mit den funktionellen Gruppen kann den Ruß oder Farbstoff physikalisch oder chemisch binden. Als Ruß beziehungsweise Farbstoffe können die vorgenannten Verbindungen oder Metallsulfide, Selensulfide, Metallpulver, Pigmente oder Buntpigmente eingesetzt werden.
Wird die Hydroxygruppen-haltige Verbindung nicht mit Silan modifiziert, so kann das Polymer funktionelle Gruppen enthalten, die mit der Hydroxygruppen-haltigen Verbindung reagieren können. Das Polymer kann funktionelle Gruppen, wie beispielsweise Epoxy-, Isocyanat-, Alkoxy- oder Hydroxy-Gruppen enthalten.

Die Reaktion kann nach folgender Gleichung ablaufen

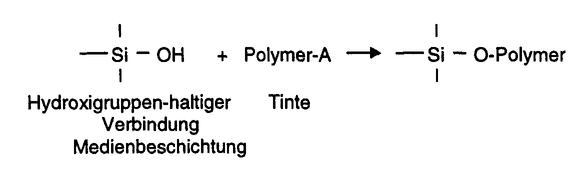

Wird die Hydroxygruppen-haltige Verbindung mit Silan modifiziert, enthalten sowohl die Hydroxygruppen-haltige Verbindung als auch das Polymer nach der Modifizierung funktionelle Gruppen, die miteinander reagieren können. Beispielsweise kann die Hydroxygruppen-haltige Verbindung mit den folgenden Silanen modifiziert werden, wobei das Polymer entsprechende funktionelle Gruppen besitzen muß:
- Alkoxyammoniumchloridsilan, beispielsweise (3-Triethoxysilylpropyl)dimethyloctadecylammonium-chlorid oder (3-Triethoxysilylpropyl)trimethylammoniumchlorid, und Polymer mit Sulfonat-Gruppen,
- Sulfonatohydroxysilan, beispielsweise 3-Sulfonatopropyltrihydroxysilan, und Polymer mit Ammoniumchlorid-Gruppen,
- Alkoxyaminosilan, beispielsweise, 3-Aminopropyltrimethoxysilan (beispielsweise Dynasylan® AMMO), 3-Aminopropyltriethoxysilan (beispielsweise Dynasylan® AMEO) oder N-Aminoethyl-3-aminopropyltrimethoxysilan (beispielsweise Dynasylan® DAMO),
   und Polymer mit Epoxygruppen,
- Alkoxyepoxysilan, beispielsweise 3-Glycidyloxypropyltrimethoxysilan (beispielsweise Dynasylan® GLYMO) oder 3-Glycidyloxypropyltriethoxysilan (beispielsweise Dynasylan® GLYEO), und Polymer mit Amino-Gruppen,
- Alkoxyaminosilan, beispielsweise 3-Aminopropyltrimethoxysilan (beispielsweise Dynasylan® AMMO), 3-Aminopropyltriethoxysilan (beispielsweise Dynasylan® AMEO) oder N-Aminoethyl-3-aminopropyltrimethoxysilan (beispielsweise Dynasylan® DAMO),
   und Polymer mit Isocyanat-Gruppen oder
- Isocyanatsilan,
   und Polymer mit Amino-Gruppen.

Als Polymere können die vorgenannten Verbindungen eingesetzt werden.

Die Reaktion kann nach folgender Gleichung ablaufen 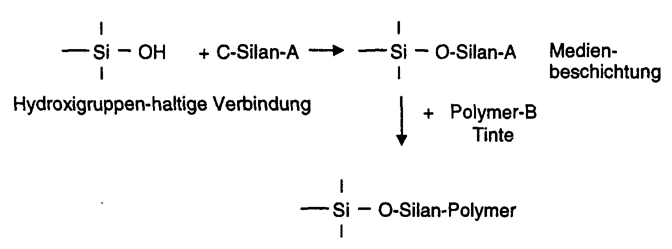 (e) Die Tinte kann einen modifizierten Ruß mit -SiR₍₃₋ₐ₎(O-(CH₂)ₙ-CH₃)ₐ- Gruppen(n = 0 - 5, a = 1-3, R = Alkyl) und die Medienbeschichtung eine Hydroxygruppen-haltige Verbindung enthalten. Die Alkoxygruppen des modifizierten Rußes können mit den Hydroxygruppen-haltigen Verbindungen reagieren.
Der modifizierte Ruß mit -SiR₍₃₋ₐ₎(O-(CH₂)ₙ-CH₃)ₐ-Gruppen kann durch Umsetzung des Rußes mit
- der entsprechenden Azidoverbindung,
- einer entsprechenden Verbindung R-S_{y}-R, mit y = 2-10 (DE 10012784.3) oder
- einer entsprechenden Verbindung, die C-C-Doppel- oder Dreifachbindung enthält, die nicht Bestandteil eines aromatischen Systems ist und deren C-C-Doppel- oder Dreifachbindung durch mindestens einen Substituenten, beispielsweise -COOR, -CO-R, -CN, -SO₂R, -SO₂OR oder-CO-X-CO-, aktiviert ist (DE 19931314.8), erhalten werden.

Als Hydroxygruppen-haltige Verbindung können gefällte Kieselsäuren, pyrogene Kieselsäuren, pyrogene Oxide, Kieselsole, Kieselgele oder natürliche Pigmente verwendet werden.

Die Alkoxygruppen des modifizierten Rußes können nach dem Bedrucken mit der Hydroxygruppen-haltigen Verbindung reagieren.
Die Reaktion kann nach folgender Gleichung ablaufen

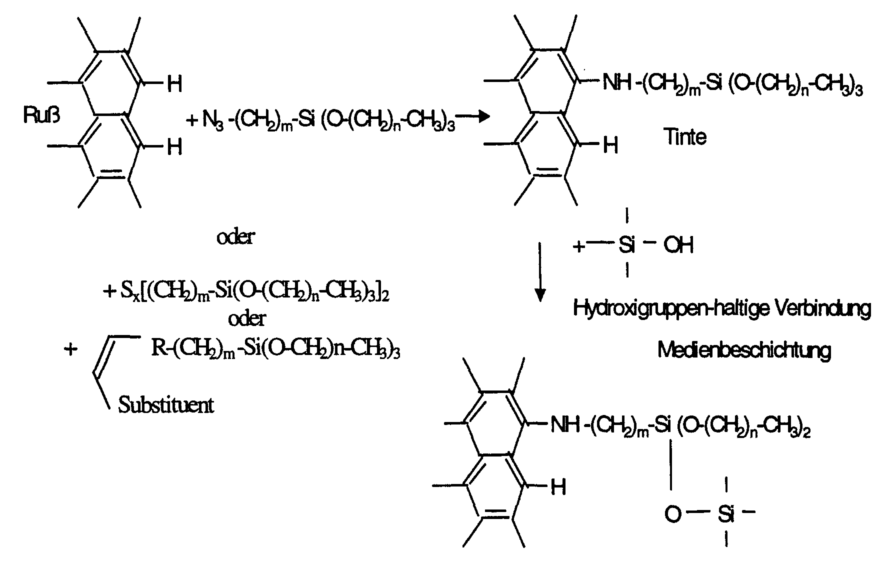

(f)Die Tinte kann ein Oligomer oder Polymer und einen Vernetzer und die Medienbeschichtung ein Oligomer oder Polymer, gegebenenfalls einen Vernetzer, enthalten. Der Vernetzer kann das Oligomer oder Polymer der Tinte vernetzen und zusätzlich mit dem Oligomer oder Polymer der Medienbeschichtung reagieren.

Als Oligomer oder Polymer können Verbindungen mit funktionellen Gruppen, beispielsweise C-C-Doppelbindungen, verwendet werden. Die funktionellen Gruppen können mit dem Vernetzer reagieren. Der Vernetzer kann durch Luft, Temperatur, Licht oder UV aktiviert werden.

(g)Die Tinte und die Medienbeschichtung können ein oder mehrere Monomere und die Tinte und/oder Medienbeschichtung einen Polymerisationsstarter enthalten. Die Tinte und die Medienbeschichtung können durch die Polymerisation hergestellten Polymere verbunden sein.

Der Polymerisationsstarter kann durch Luft, Temperatur, Licht oder UV aktiviert werden. In einer besonderen Ausführungsform der Erfindung kann durch Autokatalyse, ohne Polymerisationsstarter, polymerisiert werden.
Als Monomere können auch Dimere, Trimere oder Tetramere verwendet werden.

Die Tinte kann noch weitere Bestandteile enthalten, wie beispielsweise Wasser, Lösungsmittel, Polymer, kationische Additive, Binder, wie beispielsweise Stärke, Zellulose, Gelatin, Kasein, Polyvinylalkohol, Polyvinylpyrrolidon, Styrol-Butadien-Copolymer oder Ethylen-Vinylacetat Copolymer, Glasfritte und andere Hilfsstoffe.

Die Medienbeschichtung kann noch weitere Bestandteile enthalten, wie beispielsweise Bindemittel, Pigment, Netzmittel, Nuancierfarbstoffe, Antistatika und andere Hilfsstoffe.

Als Verfahren zur Herstellung der bedruckten Medienbeschichtung kann beispielsweise das Ink Jet Verfahren verwendet werden.

Das Bedrucken kann man bei Temperaturen von 10 °C bis 200 °C durchführen. Gegebenenfalls kann nach dem Bedrucken eine Temperung, beispielsweise durch eine beheizte Walze, bei 10°C bis 300°C erfolgen, um die Reaktion zu ermöglichen beziehungsweise zu vervollständigen.

Die bedruckten Medienbeschichtungen können je nach Medium zur Herstellung von Büchern, Zeitschriften, Plakaten, Zeitungen, Textilien, Glas-, Metall- oder Keramikartikel verwendet werden.

Die erfindungsgemäßen, bedruckten Medienbeschichtungen haben eine höhere Wasserbeständigkeit, Lichtechtheit, Wischfestigkeit und eine verbesserte Druckqualität. Das Bedrucken kann mit einer höheren Druckgeschwindigkeit erfolgen.

### Beispiele

Zur Beurteilung der Wechselwirkungen zwischen Tinten und Beschichtungsmaterialien werden coloristische Messungen vorgenommen und die verbesserte Wischfestigkeit beurteilt.

Für die beispielhaft beschriebenen Tinten auf Basis von Pigmentrußen wird die optische Dichte D mit einem Densitometer der Fa. Macbeth vom Typ RD 918 bestimmt.

Die Wischfestigkeit einer Tinten - Beschichtungsmaterialien Kombination wird nach folgendem Verfahren eingeschätzt.

Für die von uns neu entwickelte Prüfmethode wird ein modifizierter K Control Coater der Fa. Erichson genutzt. Auf das zu beschichtende Medium (Papier, Folie etc.) wird eine beispielhafte, erfindungsgemäße Tinte aufgerakelt und getrocknet, mit einer definierten Menge Wasser benetzt und durch Betätigung des Schlittens das Wasser über die zu prüfende Fläche gewischt. Als Meßwerte werden die optische Dichte vor und nach dem Wischen bestimmt und eine standardisierte Bewertung des Pigmentaustrages mit einer Ziffer von 0 (vollständiger Austrag)- 9 (kein Austrag) vorgenommen. Die Daten der ausgewählten Medienbeschichtungen sind dem entsprechenden Beispiel zugeordnet.

### Beispiel 1

### Herstellung einer Rußdispersion

In einem Dispersionsgefäß wird destilliertes Wasser vorgelegt und bei laufendem Ultra-Turrax langsam mit 7,5 % Lutensol AO 30 der Firma BASF versetzt. Nach vollständiger Lösung des Lutensols folgt die Zugabe von 2,1% Hypomer CG6 der Firma ICI Surfactants und 0,3% AMP 90 der Firma Angus Chemie. Anschließend werden portionsweise 15% Farbruß FW18 der Fa. Degussa zugegeben, die Dispersion mit dem Ultraturrax (Stufe 10) dispergiert und danach in einer Zentrifuge die groben Anteile abgetrennt.

Zur weiteren Homogenisierung der Dispersion wird eine Perlmühle eingesetzt. Die Durchflußmenge beträgt 31/h bei 3000 U/min. Zur Abtrennung von Perlbrüchen wird über ein Sieb mit 100µm Maschenweite filtriert und bei 4000 U/min zentrifugiert.

### Herstellung einer Tinte

10 g 2-Pyrrolidon, 5 g 1,2-Propandiol und 4 g 1,5-Pentandiol werden mit 65 ml Wassers aufgefüllt. Anschließend werden 35 g der oben beschriebenen Dispersion unter Rühren zugegeben. Die so erhaltene Tinte wird danach entlüftet und in die Patrone gefüllt.

### Herstellung der Medienbeschichtung

Zu 50 g Tinte werden unter Rühren 0,8 g NaNO₂ gegeben. Die Tinte wird mit der genannten Prüfmethode hinsichtlich ihrer Wischfestigkeit und optischen Dichte überprüft.

Als zu beschichtendes Medium findet ein Papier Verwendung, das nach folgendem Verfahren mit aminofunktionellen Gruppen modifiziert wird.

Zur Herstellung der Streichfarben für das Papier wird Polyvinylalkohol (PVA) in der Gesamtwassermenge bei ca. 95°C gelöst, dann Pigment (Fällungskieselsäure + Dynasilan® AMEO der Firma Sivento) bei 500 bis 1000 Upm eingearbeitet und eine halbe Stunde bei 3000 Upm dispergiert. Die Streichfarben werden auf 18 % Feststoffgehalt eingestellt. Die Beispielrezeptur enthält 100 Teile Pigment und 50 Teile Mowiol 28-99 (PVA der Firma Clariant GmbH). Der Feststoffgehalt beträgt 18%, das Auftragsgewicht ca. 10 g/m². Die Viskosität wird nach dem Aufrühren nach Brookfield bestimmt. Danach werden von allen Streichfarben je 10 Blätter von Hand auf einem 80 g/m² holzfreien Rohpapier gerakelt, die hergestellten gestrichenen Papiere kalandriert, ausgewogen und anschliessend den einzelnen Prüfungen unterzogen. Die Prüfungen zur Bestimmung der Güte des Papiers umfassen einen Drucktest (Druck eines Testbildes auf EPSON Stylus Color 800 und HP Deskjet 550) und einen Trocknungstest (Bestimmung der Trocknungszeit von 1 µl Wasser auf dem mit Tinte beschichteten Papier).

Die optische Dichte des oben beschriebenen erfindungsgemäßen Tintenaufstrichs liegt bei 1,11. Die Differenz zu der optischen Dichte nach dem Wischvorgang beträgt 0,05. Der Pigmentaustrag wird mit 8 bewertet.

### Beispiel 2

### Funktionalisierung eines Pigmentrußes

15 g eines mit Silizium dotierten Rußes (gemäß EP 0799866) werden in 100 ml Methylethylketon eingerührt, mit 1,5 g Dynasylan® Glymo der Firma Sivento versetzt, 12 Stunden bei Raumtemperatur gerührt und anschließend abgesaugt. Der erhaltene Ruß wird anschließend im Trockenschrank bei 100 °C acht Stunden getrocknet.

Der funktionalisierte Ruß wird nach dem in Beispiel 1 beschriebenen Verfahren in eine Dispersion eingearbeitet und diese in eine Tinte überführt. Die Tinte wird mit der genannten Prüfmethode hinsichtlich ihrer Wischfestigkeit und optischen Dichte überprüft.

Als zu beschichtendes Medium findet ein Papier Verwendung, das nach dem in Beispiel 1 beschriebenen Verfahren beschichtet wird.

Die optische Dichte des entsprechenden Aufstrichs liegt bei 1,23. Die Differenz zu der optischen Dichte nach dem Wischvorgang beträgt 0,11. Der Pigmentaustrag wird mit 7 bewertet.

### Beispiel 3

### Funktionalisierung eines Pigmentrußes

15 g eines mit Silizium dotierten Rußes (gemäß EP 0799866) werden in 100 ml Methylethlyketon eingerührt, mit 1,5 g Dynasylan® 1161 (bezogen auf Wirkstoff) der Firma Sivento versetzt, 12 Stunden bei Raumtemperatur gerührt und anschließend abgesaugt. Der erhaltene Ruß wird anschließend im Trockenschrank bei 100 °C acht Stunden getrocknet.

Der funktionalisierte Ruß wird nach dem in Beispiel 1 beschriebenen Verfahren in eine Dispersion eingearbeitet und diese in eine Tinte überführt. Die Tinte wird mit der genannten Prüfmethode hinsichtlich ihrer Wischfestigkeit und optischen Dichte überprüft.

Als zu beschichtendes Medium findet ein Papier Verwendung, das nach dem in Beispiel 1 beschriebenen Verfahren beschichtet wird. Zusätzlich zu den beschriebenen Inhaltsstoffen wurde Polystabil S312 der Firma Stockhausen zugegeben.

Die optische Dichte des entsprechenden Aufstrichs liegt bei 1,20. Die Differenz zu der optischen Dichte nach dem Wischvorgang beträgt 0,04. Der Pigmentaustrag wird mit 9 bewertet.

### Beispiel 4

### Herstellung einer Rußdispersion

Die Dispersion wird analog zu Beispiel 1 hergestellt. Als polymeres Netzmittel wird Tego ABIL Soft AF 100 der Fa.TEGO verwendet.

Die Dispersion wird, wie in Beispiel 1 beschrieben, in eine Tinte überführt.

Als zu beschichtendes Medium findet ein Papier Verwendung, das nach dem in Beispiel 1 beschriebenen Verfahren beschichtet wird. Statt Dynasilan® AMEO wird Dynasilan® Glymo in den Papierstrich eingearbeitet.

Die optische Dichte des entsprechenden Aufstrichs liegt bei 1,25. Die Differenz zu der optischen Dichte nach dem Wischvorgang beträgt 0,03. Der Pigmentaustrag wird mit 9 bewertet.

### Beispiel 5

### Funktionalisierung eines Pigmentrußes

### Variante 1:

10 g Farbruß FW1 der Fa. Degussa werden mit einer Lösung von 2 ml Azidosilan Si250 der Fa. Degussa in 150 ml Aceton versetzt, 30 Minuten bei RT gerührt und anschließend das Lösungsmittel im Vakuum abgezogen. Der Ruß wird zwei Stunden bei 180°C getempert. Danach wird mit Aceton gewaschen und im Trockenschrank bei 105°C acht Stunden getrocknet.

### Variante 2

10 g FW1 werden mit einer Lösung von 2 ml Azidosilan Si250 der Fa. Degussa in 150 ml Aceton versetzt, die Lösung wird unter Bestrahlung zweier Laborheizlampen und Wasserkühlung (Temp<50°C) sechs Stunden gerührt. Anschließend wird abgesaugt und im Trockenschrank bei 105°C acht Stunden getrocknet.

Die funktionalisierten Ruße werden nach dem in Beispiel 1 beschriebenen Verfahren in Dispersionen eingearbeitet und diese in Tinten überführt. Die Tinte wird mit der genannten Prüfmethode hinsichtlich ihrer Wischfestigkeit und optischen Dichte überprüft.

Als zu beschichtendes Medium findet copy office Papier der Fa. Kompass Verwendung.

Die optische Dichte des entsprechenden Aufstrichs liegt bei 1,45 (Variante 1) beziehungsweise 1,42 (Variante 2). Die Differenz zu der optischen Dichte nach dem Wischvorgang beträgt 0,02 (Variante 1) beziehungsweise 0,04 (Variante 2). Der Pigmentaustrag wird mit 9 (Variante 1) beziehungsweise 8 (Variante 2) bewertet.

### Beispiel 6

### Funktionalisierung eines Pigmentrußes

2 g Si69 (Bis(triethoxysilylpropyl)tetrasulfan) der Firma Degussa werden in 150 ml Toluol gelöst, mit 10 g FW1 versetzt und fünf Stunden unter Rückfluß gekocht. Anschließend wird der Ruß abgesaugt und im Trockenschrank bei 105°C acht Stunden getrocknet. Die Ausbeute wird anhand der Menge erhaltenen Rußes bestimmt.

### Ausbeute: 75%

Der funktionalisierte Ruß wird nach dem in Beispiel 1 beschriebenen Verfahren in eine Dispersion eingearbeitet und diese in eine Tinte überführt. Die Tinte wird mit der genannten Prüfmethode hinsichtlich ihrer Wischfestigkeit und optischen Dichte überprüft

Als zu beschichtendes Medium fand copy office Papier der Fa. Kompass Verwendung.

Die optische Dichte des entsprechenden Aufstrichs liegt bei 1,42. Die Differenz zu der optischen Dichte nach dem Wischvorgang beträgt 0,04. Der Pigmentaustrag wird mit 9 bewertet.

Die beschriebenen Tinten werden auf ihre Verdruckbarkeit hin überprüft. Drucktests werden mittels marktüblichen Office - Tintenstrahldruckern durchgeführt. Der Andruck findet von je einer Seite auf vier verschiedenen, handelsüblichen ink jet Papieren sowie Kopierpapier sofort, nach 5 min., 10 min.,20 min., 30 min. und 60 min. Druckpause statt. Des weiteren wird ein Langzeittest (drucken von 20 Seiten ohne Pause) und ein Refire Test (Überprüfung des Anschreibverhaltens der Tinte nach 1, 3 bzw. 7 Tagen Druckpause) vorgenommen. Die Druckbilder entsprechen beziehungsweise übertreffen die Ergebnisse der entsprechenden Originaltinten.

## Patentansprüche

1. Bedruckte Medienbeschichtung, **dadurch gekennzeichnet, dass** mindestens ein Bestandteil der Tinte über eine chemische Bindung mit mindestens einem Bestandteil der Medienbeschichtung verbunden ist.

2. Bedruckte Medienbeschichtung nach Anspruch 1, **dadurch gekennzeichnet, dass** die Medien Glas, Keramik, Kunststoff, Textilien, Leder oder Papier sind.

3. Bedruckte Medienbeschichtung nach Anspruch 1, **dadurch gekennzeichnet, dass** die Tinte Nitrit und Ruß und/oder Farbstoff und die Medienbeschichtung eine Aminogruppen-haltige Verbindung enthält.

4. Bedruckte Medienbeschichtung nach Anspruch 1, **dadurch gekennzeichnet, dass** die Tinte einen dotierten Ruß oder Farbstoff und die Medienbeschichtung eine Hydroxygruppen-haltige Verbindung enthält, wobei der dotierte Ruß oder Farbstoff und/oder die Hydroxygruppen-haltige Verbindung mit einem Silan modifiziert ist.

5. Bedruckte Medienbeschichtung nach Anspruch 1, **dadurch gekennzeichnet, dass** die Tinte einen, gegebenenfalls mit einem Silan modifizierten, dotierten Ruß oder Farbstoff und die Medienbeschichtung ein Polymer mit funktionellen Gruppen enthält.

6. Bedruckte Medienbeschichtung nach Anspruch 1, **dadurch gekennzeichnet, dass** die Tinte ein Polymer mit funktionellen Gruppen und die Medienbeschichtung eine Hydroxygruppen-haltige, gegebenenfalls mit Silan modifizierte, Verbindung enthält.

7. Bedruckte Medienbeschichtung nach Anspruch 1, **dadurch gekennzeichnet, dass** die Tinte einen Ruß mit -SiR₍₃₋ₐ₎(O-(CH₃)ₙ-CH₃)ₐ-Gruppen (n = 0 - 5, a = 1 - 3, R = Alkyl) und die Medienbeschichtung eine Hydroxygruppen-haltige Verbindung enthält.

8. Bedruckte Medienbeschichtung nach Anspruch 1, **dadurch gekennzeichnet, dass** die Tinte ein Oligomer oder Polymer und einen Vernetzer und die Medienbeschichtung ein Oligomer oder Polymer, gegebenenfalls einen Vernetzer, enthält.

9. Bedruckte Medienbeschichtung nach Anspruch 1, **dadurch gekennzeichnet, dass** die Tinte und die Medienbeschichtung ein oder mehrere Monomere enthalten und die Tinte und/oder Medienbeschichtung einen Polymerisationsstarter enthält.

10. Tinte, **dadurch gekennzeichnet, daß** mindestens ein Bestandteil der Tinte eine chemische Bindung mit mindestens einem Bestandteil der Medienbeschichtung ausbildet.

11. Medienbeschichtung, **dadurch gekennzeichnet, daß** mindestens ein Bestandteil der Medienbeschichtung eine chemische Bindung mit mindestens einem Bestandteil der Tinte ausbildet.

12. Verfahren zur Herstellung von bedruckter Medienbeschichtung nach Anspruch 1, **dadurch gekennzeichnet, daß** man die Tinte auf die Medienbeschichtung aufsprüht, aufdruckt oder aufdüst und mindestens ein Bestandteil der Tinte mit mindestens einem Bestandteil der Medienbeschichtung unter Ausbildung einer chemischen Bindung reagiert.

13. Verfahren zur Herstellung von bedruckter Medienbeschichtung nach Anspruch 12, **dadurch gekennzeichnet, dass** man ein Ink Jet Verfahren verwendet.

14. Verfahren zur Herstellung von bedruckter Medienbeschichtung nach Anspruch 12, **dadurch gekennzeichnet, daß** man das Bedrucken bei Temperaturen von 10°C bis 200°C durchführt.

15. Verfahren zur Herstellung von bedruckter Medienbeschichtung nach Anspruch 12, **dadurch gekennzeichnet, daß** die Tinte Nitrit und Ruß und/oder Farbstoff und die Medienbeschichtung eine Aminogruppen-haltige Verbindung enthält.

16. Verfahren zur Herstellung von bedruckter Medienbeschichtung nach Anspruch 12, **dadurch gekennzeichnet, daß** die Tinte ein dotierten Ruß oder Farbstoff und die Medienbeschichtung eine Hydroxygruppen-haltige Verbindung enthält, wobei der dotierte Ruß oder Farbstoff und/oder die Hydroxygruppen-haltige Verbindung mit einem Silan modifiziert ist.

17. Verfahren zur Herstellung von bedruckter Medienbeschichtung nach Anspruch 12, **dadurch gekennzeichnet, daß** die Tinte ein, gegebenenfalls mit einem Silan modifizierten, dotierten Ruß oder Farbstoff und die Medienbeschichtung ein Polymer mit funktionellen Gruppen enthält.

18. Verfahren zur Herstellung von bedruckter Medienbeschichtung nach Anspruch 12, **dadurch gekennzeichnet, dass** die Tinte eine Polymer mit funktionellen Gruppen und die Medienbeschichtung eine Hydroxygruppen-haltige, gegebenenfalls mit Silan modifizierte, Verbindung enthält.

19. Verfahren zur Herstellung von bedruckter Medienbeschichtung nach Anspruch 12, **dadurch gekennzeichnet, daß** die Tinte einen Ruß mit -SiR₍₃₋ₐ₎(O-(CH₂)ₙ-CH₃)ₐ-Gruppen (n = 0-5, a = 1-3, R = Alkyl) und die Medienbeschichtung eine Hydroxygruppen-haltige Verbindung enthält.

20. Verfahren zur Herstellung von bedruckter Medienbeschichtung nach Anspruch 12, **dadurch gekennzeichnet, dass** die Tinte ein Oligomer oder Polymer und einen Vernetzer und die Medienbeschichtung ein Oligomer oder Polymer, gegebenenfalls einen Vernetzer, enthält.

21. Verfahren zur Herstellung von bedruckter Medienbeschichtung nach Anspruch 12, **dadurch gekennzeichnet, dass** die Tinte und die Medienbeschichtung ein oder mehrere Monomere und die Tinte und/oder Medienbeschichtung einen Polymerisationsstarter enthalten.

22. Verwendung der bedruckten Medienbeschichtung nach Anspruch 1, zur Herstellung von Büchern, Zeitschriften, Plakaten, Zeitungen, Textilien, Glas-, Metall- oder Keramikartikel.
